# NEUE EUROPÄISCHE PATENTSCHRIFT

(11) **EP 2 639 140 B2**
(45) Veröffentlichungstag und Bekanntmachung des Hinweises auf die Entscheidung über den Einspruch: **05.09.2018**
(45) Hinweis auf die Patenterteilung: 07.01.2015
(21) Anmeldenummer: 12194582.8
(22) Anmeldetag: 28.11.2012
(51) Int. Cl.: B62D 21/12, B62D 21/18, B62D 49/00

(54) **Traktor**
Tractor
Tracteur

(30) Priorität: 13.03.2012 DE 102012004863
(43) Veröffentlichungstag der Anmeldung: 18.09.2013
(73) Patentinhaber: CLAAS Tractor SAS, 78141 Velizy-Villacoublay (FR)
(72) Erfinder: Vallee, Sebastien, 78170 La Celle Saint Cloud (FR); Peschard, Simon, 75015 Paris (FR); Dussere, Thibaut, 92150 Suresnes (FR)
(74) Vertreter: Budach, Steffen

(56) Entgegenhaltungen:
- EP-B1- 1 600 311
- EP-B1- 1 627 762
- EP-B1- 1 688 595
- WO-A1-2009/059699
- WO-A2-01/83283
- WO-A2-2012/022643
- GB-B- 2 114 072
- US-A- 5 152 364
- US-A- 5 620 297
- US-A1- 2005 045 797
- US-A1- 2010 288 223
- US-B- 4 548 543
- US-B1- 6 352 232
- US-B1- 6 470 991
- US-B1- 7 124 853
- "Subframe Mounting Instructions for Valtra N-Series (Instr. No 16322334)"
- "Quicke Q 640 Instruction Manual (21 09 014 E)"

## Beschreibung

Die vorliegende Erfindung betrifft einen Traktor. Traktoren für die Feldarbeit haben im Allgemeinen ein Fahrwerk mit einem einheitlichen Rahmen, an dem Vorder- und Hinterachse angebracht sind und auf dem eine Antriebseinheit, ein Getriebe etc. montiert sind. Um mit einem Traktor schnell und effizient manövrieren zu können, ist es wünschenswert, die Räder der lenkbaren Achse, im Allgemeinen der Vorderachse, möglichst weit einschlagen zu können. Je weiter der Einschlag ist, um so stärker nähern sich Teile der Räder dem Rahmen an. Die Achslänge, insbesondere ihr seitlicher Überstand über den Rahmen, kann so groß sein, dass ein Kontakt der Räder mit dem Rahmen unmöglich ist, egal wie stark die Räder eingeschlagen sind. Ein solch weiter Überstand ist jedoch sowohl unter statischen Gesichtspunkten als auch mit Rücksicht auf den Platzbedarf des Traktors im Verkehr unzweckmäßig. Daher ist in der Praxis der maximal erreichbare Einschlagwinkel durch ein Anstoßen der Räder an den Rahmen begrenzt. Insbesondere wenn ein Frontlader am Traktor anbringbar sein soll und eine Aufnahmevorrichtung für den Frontlader seitlich an den Rahmen angefügt ist, kann dies zu einer störenden Einschränkung der Einschlagbewegungsfreiheit der Räder führen.

Es sei auf das Dokument US 7124 853 B1 verwiesen, aus dem ein Radlader bekannt ist, bei dem eine Vorderachse einem vorderen Rahmenabschnitt zugeordnet ist und eine Hinterachse einem hinteren Rahmenabschnitt zugeordnet ist. Eine die Achsen mit Antriebsenergie versorgende Antriebseinheit erstreckt sich in Längsrichtung vom vorderen zum hinteren Rahmenabschnitt.

Aufgabe der Erfindung ist, einen Traktor zu schaffen, der bei gegebener Achslänge hohe Einschlagwinkel der lenkbaren Räder erlaubt.

Die Aufgabe wird gelöst, indem bei einem Traktor mit einer Antriebseinheit, einem Fahrwerk mit Vorder- und Hinterachse und einer Aufnahmevorrichtung für einen Frontlader das Fahrwerk in einen vorderen Rahmenabschnitt, an dem die Vorderachse angebracht ist, und einen von dem vorderen Rahmenabschnitt beabstandeten hintern Rahmenabschnitt, an dem die Hinterachse angebracht ist, unterteilt ist, und die beiden Rahmenabschnitte durch die Antriebseinheit miteinander verbunden sind. Durch die Unterbrechung des Rahmens in einem Bereich zwischen Vorder- und Hinterachse kann der zwischen den Achsen zum Einschlagen der lenkbaren Räder verfügbare Platz maximiert werden. Die Antriebseinheit umfasst einen Motorblock und eine Ölwanne, wobei die Ölwanne an vorderem und hinterem Rahmenabschnitt befestigt ist. Dadurch kann die Ölwanne am vorderen und hinteren Rahmenabschnitt des Fahrwerks befestigt sein und so die statische Funktion des dazwischen weggefallenen Teils des Rahmens übernehmen.

Die Verbindung der Fahrwerksabschnitte der Antriebseinheit ist vorzugsweise jeweils durch Schrauben gebildet.

Eine besonders große Einschlagsbewegungsfreiheit ist erreichbar, wenn die Ölwanne schmaler ist als der darüber angeordnete Motorblock.

Um einerseits den seitlichen Überstand der Vorderachse über den vorderen Rahmenabschnitt gering zu halten und andererseits eine hohe Eingchlagsbewegungsfreiheit zu erzielen, ist der vordere Rahmenabschnitt vorzugweise von der Vorderachse aus nach hinten verjüngt.

Die Aufnahmevorrichtung für den Frontlader kann an der Antriebseinheit befestigt sein. Da eine Befestigung der Aufnahmevorrichtung am vorderen Rahmenabschnitt nicht vorgesehen ist, braucht die Aufnahmevorrichtung nicht in den Schwenkbereich von lenkbaren Vorderrädern einzugreifen und beeinträchtigt deren Schwenkbewegungsfreiheit nicht.

Die Antriebseinheit kann eine im Wesentlichen horizontale Befestigungsschiene und einen von der Befestigungsschiene aufragenden, Lager für den Frontlader aufweisenden Tragarm umfassen. Ein vorderer Teil der Befestigungsschiene sollte an einem hinteren Bereich der Antriebseinheit, insbesondere an der Ölwanne, befestigt sein, um im vorderen Bereich der Antriebseinheit keine Einschränkung der Einschlagbewegungsfreiheit der Vorderräder zu bewirken.

Ein hinterer Teil der Befestigungsschiene kann an einem - im Allgemeinen unmittelbar hinter der Antriebseinheit angeordneten - Getriebegehäuse befestigt sein.

Ein Teil der Befestigungsschiene, der sich von ihrer Verbindungsstelle mit dem Tragarm aus nach hinten erstreckt, sollte vorzugsweise länger sein als ein sich zum vorderen Ende der Befestigungsschiene erstreckender Bereich, um die Last des Frontladers über ausreichend weit beabstandete Befestigungspunkte in die tragende Struktur des Traktor einleiten zu können.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Traktors;
- Fig. 2: eine schematische perspektivische Ansicht von Teilen der tragenden Struktur des Traktors;
- Fig. 3: eine perspektivische Draufsicht auf die Teile der Fig. 1 und auf in eingeschlagener Stellung gezeigte Vorderräder;
- Fig. 4: eine Seitenansicht der Ölwanne; und
- Fig. 5: einen Schnitt durch die Ölwanne und Teile der Aufnahmevorrichtung des Frontladers.

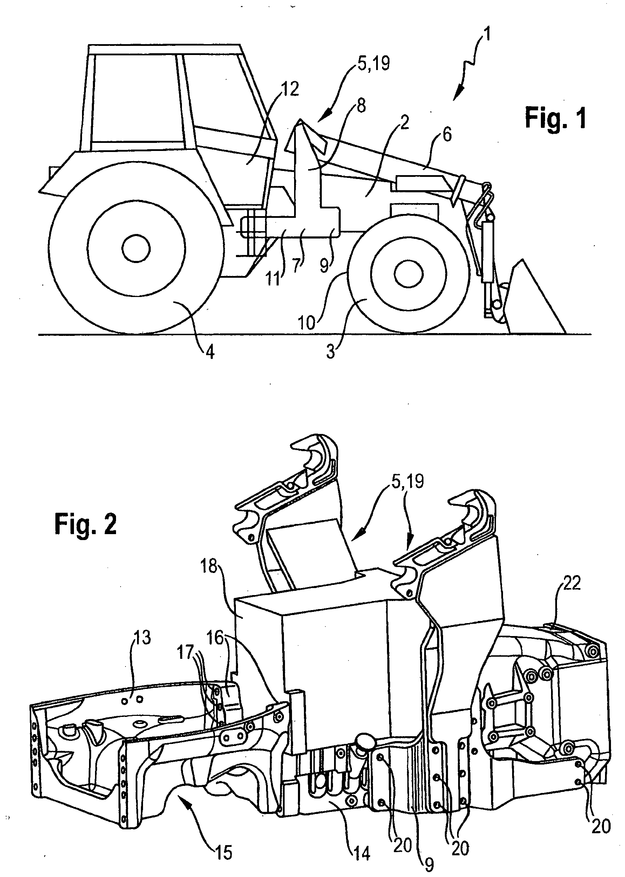

Fig. 1 zeigt in einer schematischen Seitenansicht einen Traktor 1, an dessen Chassis 2 lenkbare Vorderräder 3, Hinterräder 4 und, über eine Aufnahmevorrichtung 5, ein Frontlader 6 montiert sind. Die Aufnahmevorrichtung 5 umfasst zwei an gegenüberliegenden Seiten des Chassis 2 montierte, in der Seitenansicht einen über Kopf stehenden T-ähnliche Beschlagteile 19, die jeweils eine im Wesentlichen horizontale, in einem unteren Bereich des Chassis 2 mittels Schrauben fixierte Befestigungsschiene 7 sowie einen von der Befestigungsschiene 7 auftragenden, an seinem oberen Ende mit Haltegabeln für die Aufnahme der Frontladevorrichtung ausgestatten Tragarm 8 umfassen. Ein vom Verbindungspunkt mit dem Tragarm 8 nach vorn vorspringender Teil 9 der Befestigungsschiene 7 ist von geringer Länge und springt insbesondere nicht über einen hintersten Punkt 10 der Vorderräder 3 vor, sodass eine Beeinträchtigung der Einschlagbewegungsfreiheit der Vorderräder 3 durch die Aufnahmevorrichtung 5 ausgeschlossen ist.

Um dennoch für eine belastbare Verankerung der Aufnahmevorrichtung 5 ausreichend weit auseinander liegende Befestigungspunkte schaffen zu können, ist ein sich vom Angriffspunkt des Tragarm 8 nach hinten erstreckender hinterer Teil 11 der Befestigungsschiene 7 erheblich länger als der vordere Teil 9 und kann bis unter eine Fahrerkabine 12 reichen.

Fig. 2 zeigt in einer perspektivischen Ansicht und unter Weglassung von sie beim vollständigen Traktor verbergenden Karosserieblechen einzelne Komponenten des Chassis 2. Ein vorderer Rahmenabschnitt des Fahrgestells des Traktors, mit 13 bezeichnet, trägt die Vorderachse und die Vorderräder 3. Vorderachse und Vorderräder sind in Fig. 2 nicht dargestellt, stattdessen ist an der Unterseite des Rahmenabschnitts 13 eine sich in Querrichtung erstreckende Kehle 15 zu sehen, durch die die Vorderachse verläuft. An einer Rückseite des vorderen Rahmenabschnitts 13 ist ein großflächiger Flansch 16 mit mehreren Schraubbohrungen 17 gebildet, vom dem ein unterer Teil mit einem komplementären Anschlussflansch einer Ölwanne 14 überlappt und an dieser verschraubt ist. Zwei obere seitliche Schenkel des in etwa U-förmigen Flansches 16 sind an der Stirnseite eines auf der Ölwanne 14 ruhenden Motorblocks 18 verschraubt.

Ein linkes Beschlagteil 19 der Aufnahmevorrichtung 5 verdeckt einen hinteren Bereich der Ölwanne 14 und des Motorblocks 18. Man erkennt eine Mehrzahl von Schraubbohrungen 20, einerseits an der Spitze des vorderen Teils 9 als auch in zwei Reihen im Verbindungsbereich zwischen Befestigungsschiene 7 und Tragarm 8 des Beschlagteils 19 sowie an der Spitze des hinteren Teils 11. Mit den Schraubbohrungen 20 des vorderen Teils 9 korrespondieren - in Fig. 2 von dem Beschlagteil 19 verdeckte - von der Ölwanne 14 abstehende, mit Innengewinden versehene Rippen. Die zwei mittleren Reihen von Schraubbohrungen 20 dienen der Befestigung an der Ölwanne 14 sowie an einem in der Figur nicht sichtbaren hinteren Rahmenabschnitt, auf dem ein Getriebegehäuse 22 montiert ist und an dem die Hinterachse angebracht ist. Die Schraubbohrungen 20 an der Spitze des Teils 11 können sowohl zur Befestigung am hinteren Rahmenabschnitt als auch am Getriebegehäuse 22 dienen.

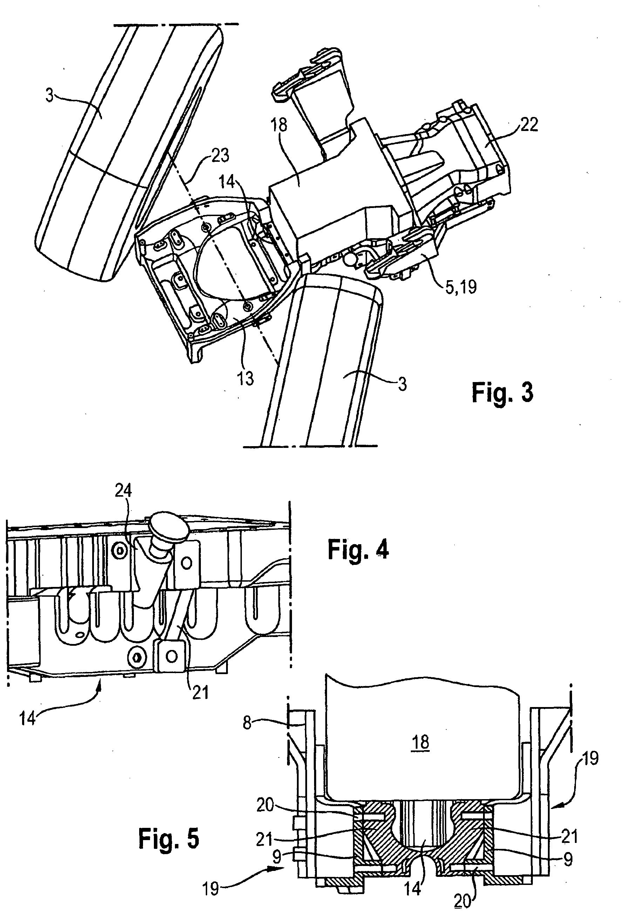

Fig. 3 zeigt eine Draufsicht auf den vorderen Rahmenabschnitt 13, den Motorblock 18, das Getriebegehäuse 22 und die Aufnahmevorrichtung 5 sowie auf die in maximal eingeschlagener Stellung gezeigten Vorderräder 3. Der Verlauf der Vorderachse ist durch eine strichpunktierte Linie 23 angedeutet. Diese kreuzt den vorderen Rahmenabschnitt 13 an seiner breitesten Stelle; von dort zum Motorblock 18 hin ist der Rahmenabschnitt 13 kontinuierlich verjüngt. Auf diese Weise kann ein für die statische Belastbarkeit günstiger kurzer Überstand der Vorderachse über den vorderen Rahmenabschnitt 13 kombiniert werden mit einer großen Einschlagbeweglichkeit der Vorderräder 3.

Fig. 4 zeigt die Ölwanne 14 in Seitenansicht. Die zur Befestigung der Aufnahmevorrichtung 5 von der Seitenwand der Ölwanne 14 vorspringende und mit einer Gewindebohrung zur Verankerung des Beschlagteils 19 versehene Rippe 21 gleicht die Tatsache aus, dass die Ölwanne 14 schmaler ist als der auf ihr ruhende Motorblock 18. So kann in einer maximal eingeschlagenen Stellung ein Stück eines Vorderrades 3 vor der Rippe 21 und einem dazu benachbarten Öleinfüllstutzen 24 sogar ein Stück weit unter den Motorblock 18 eingreifen, ohne dabei mit dem Chassis in Kontakt zu kommen.

Fig. 5 zeigt einen schematischen Schnitt durch die Ölwanne 14 und die vorderen Teile 9 der Beschlagteile 19 in Höhe der auf beiden Seiten der Ölwanne 14 abstehenden Rippen 21. Deutlich ist hier der seitliche Überstand des Motorblocks 18 über die Ölwanne 14 zu erkennen.

### Bezugszeichen

- 1: Traktor
- 2: Chassis
- 3: Vorderrad
- 4: Hinterrad
- 5: Aufnahmevorrichtung
- 6: Frontlader
- 7: Befestigungsschiene
- 8: Tragarm
- 9: vorderes Teil
- 10: hinterster Punkt
- 11: hinteres Teil
- 12: Fahrerkabine
- 13: vorderer Rahmenabschnitt
- 14: Ölwanne
- 15: Kehle
- 16: Flansch
- 17: Schraubbohrung
- 18: Motorblock
- 19: Beschlagteil
- 20: Schraubbohrung
- 21: Rippe
- 22: Getriebegehäuse
- 23: Vorderachse
- 24: Öleinfüllstutzen

## Patentansprüche

1. Traktor mit einer Antriebseinheit (14, 18), einem Fahrwerk mit Vorder- und Hinterachse und einer Aufnahmevorrichtung (5) für einen Frontlader (6), wobei das Fahrwerk einen vorderen Rahmenabschnitt (13), an dem die Vorderachse angebracht ist, und einen von dem vorderen Rahmenabschnitt (13) beabstandeten hinteren Rahmenabschnitt, an dem die Hinterachse angebracht ist, umfasst, **dadurch gekennzeichnet, dass** die beiden Rahmenabschnitte durch die Antriebseinheit (14, 18) miteinander verbunden sind, wobei die Antriebseinheit (14, 18) einen Motorblock (18) und eine Ölwanne (14) umfasst, wobei die Ölwanne (14) an vorderem (13) und hinterem Rahmenabschnitt befestigt ist, wobei die Aufnahmevorrichtung (5) an der Antriebseinheit (14,18) befestigt ist, wobei die Aufnahmevorrichtung (5) eine im wesentlichen horizontale Befestigungsschiene (7) und einen, von der Befestigungsschiene (7) aufragenden, Lager für den Frontlader (6) aufweisenden Tragarm (8) umfasst, ein vorderer Teil (9) der Befestigungsschiene (7) an einem hinteren Bereich der Antriebseinheit (14, 18), insbesondere an der Ölwanne, befestigt ist, und ein hinterer Teil (11) der Befestigungsschiene (7) an einem Getriebegehäuse (22) befestigt ist..

2. Traktor nach Anspruch 1, **dadurch gekennzeichnet, dass** die Verbindung der Fahrwerksabschnitte mit der Antriebseinheit jeweils durch Schrauben gebildet ist.

3. Traktor nach Anspruch 1 oder 2, **dadurch gekennzeichnet, dass** die Ölwanne (14) schmaler ist als der darüber angeordnete Motorblock (18).

4. Traktor nach einem der vorhergehenden Ansprüche, **dadurch gekennzeichnet, dass** der vordere Rahmenabschnitt (13) von der Vorderachse (23) aus nach hinten verjüngt ist.

5. Traktor nach Anspruch 1, **dadurch gekennzeichnet, dass** ein sich von der Verbindungsstelle mit dem Tragarm (8) nach hinten erstreckender Teil (11) der Befestigungsschiene (7) länger ist als ein sich nach vorn erstreckender Teil (9).

## Claims

1. A tractor comprising a drive unit (14, 18), a chassis with a front and a rear axle and a mounting device (5) for a front loader (6), wherein the chassis includes a front frame portion (13) to which the front axle is mounted and a rear frame portion which is spaced from the front frame portion (13) and to which the rear axle is mounted,
**characterised in that** the two frame portions are connected together by the drive unit (14, 18), wherein the drive unit (14, 18) includes an engine block (18) and an oil sump (14), wherein the oil sump (14) is fixed to the front (13) and rear frame portions, wherein the mounting device (5) is fixed to the drive unit (14, 18), wherein the mounting device (5) includes a substantially horizontal fixing rail (7) and a carrier arm (8) which stands up from the fixing rail (7) and has mountings for the front loader (6), a front part (9) of the fixing rail (7) is fixed to a rear region of the drive unit (14, 18), in particular to the oil sump (14), and a rear part (11) of the fixing rail (7) is fixed to a transmission housing (22).

2. A tractor according to claim 1 **characterised in that** the connection of the chassis portions to the drive unit is respectively formed by screws.

3. A tractor according to claim 1 or claim 2 **characterised in that** the oil sump (14) is narrower than the engine block (18) arranged thereabove.

4. A tractor according to one of the preceding claims **characterised in that** the front frame portion (13) is narrowed rearwardly from the front axle (23).

5. A tractor according to claim 1 **characterised in that** a part (11) of the fixing rail (7), that extends rearwardly from the connection with the carrier arm (8), is longer than a forwardly extending part (9).

## Revendications

1. Tracteur comprenant une unité d'entraînement (14, 18), un châssis avec essieu avant et arrière et un dispositif de réception (5) pour un chargeur frontal (6), le châssis comportant une partie de châssis avant (13), à laquelle est fixé l'essieu avant, et une partie de châssis arrière qui est espacée de la partie de châssis avant (13) et à laquelle est fixé l'essieu arrière, **caractérisé en ce que** les deux parties de châssis sont reliées entre elles par l'unité d'entraînement (14, 18), l'unité d'entraînement (14, 18) comprenant un bloc-moteur (18) et un carter d'huile (14), lequel carter d'huile (14) est fixé à la partie de châssis avant (13) et à la partie de châssis arrière, le dispositif de réception (5) étant fixé à l'unité d'entraînement (14, 18), le dispositif de réception (5) comprenant un rail de fixation (7) sensiblement horizontal et un bras de support (8) qui s'élève depuis le rail de fixation (7) et qui comporte des paliers pour le chargeur frontal (6), une partie avant (9) du rail de fixation (7) étant fixée à une zone arrière de l'unité d'entraînement (14, 18), en particulier au carter d'huile, et une partie arrière (11) du rail de fixation (7) étant fixée à un carter de boîte de vitesses (22).

2. Tracteur selon la revendication 1, **caractérisé en ce que** la liaison des parties de châssis avec l'unité d'entraînement est réalisée chaque fois à l'aide de vis.

3. Tracteur selon la revendication 1 ou 2, **caractérisé en ce que** le carter d'huile (14) est plus étroit que le bloc-moteur (18) disposé au-dessus.

4. Tracteur selon l'une des revendications précédentes, **caractérisé en ce que** la partie de châssis avant (13) se rétrécit de l'essieu avant (23) vers l'arrière.

5. Tracteur selon l'une des revendications 6 à 8, **caractérisé en ce qu'**une partie (11) du rail de fixation (7) s'étendant du point de liaison avec le bras de support (8) vers l'arrière est plus longue qu'une partie (9) s'étendant vers l'avant.
